# EUROPÄISCHE PATENTSCHRIFT

(11) **EP 2 467 297 B1**
(45) Veröffentlichungstag und Bekanntmachung des Hinweises auf die Patenterteilung: **27.05.2015**
(21) Anmeldenummer: 10747588.1
(22) Anmeldetag: 17.08.2010
(51) Int. Cl.: B64C 9/22

(54) **VERSTELLMECHANISMUS EINER VERSTELLVORRICHTUNG ZUR ANKOPPLUNG EINER VERSTELLKLAPPE AN EINEN HAUPTFLÜGEL UND EINE SOLCHE VERSTELLVORRICHTUNG**
ADJUSTMENT MECHANISM OF AN ADJUSTMENT DEVICE FOR COUPLING AN ADJUSTMENT FLAP TO A MAIN WING, AND SUCH AN ADJUSTMENT DEVICE
MÉCANISME DE RÉGLAGE D'UN DISPOSITIF DE RÉGLAGE SERVANT À ACCOUPLER UN VOLET DE RÉGLAGE À UNE AILE PRINCIPALE ET DISPOSITIF DE RÉGLAGE ASSOCIÉ

(30) Priorität: 17.08.2009 DE 102009037707; 17.08.2009 US 234378 P
(43) Veröffentlichungstag der Anmeldung: 27.06.2012
(73) Patentinhaber: Airbus Operations GmbH, 21129 Hamburg (DE)
(72) Erfinder: SCHLIPF, Bernhard, 28201 Bremen (DE); MISSBACH, Mirko, 28357 Bremen (DE)
(74) Vertreter: UEXKÜLL & STOLBERG
(86) Internationale Anmeldenummer: PCT/EP2010/005038
(87) Internationale Veröffentlichungsnummer: WO 2011/020593

(56) Entgegenhaltungen:
- EP-A2- 1 764 303
- DE-A1- 2 354 420
- GB-A- 2 073 681
- GB-A- 2 362 363

## Beschreibung

Die Erfindung betrifft einen Verstellmechanismus einer Verstellvorrichtung zur Ankopplung einer Verstellklappe und insbesondere einer Hochauftriebsklappe an einen Hauptflügel und eine solche Verstellvorrichtung.

Die Dokumente EP1764303A2, GB2362363A, GB2073681A, DE2354420A1 beschreiben Verstellmechanismen zur Bewegung einer Hochauftriebsklappe an einem Hauptflügel.

Aus der DE 10 2005 044 549 B4 ist ein Tragflügel mit einem Hauptflügel und einer Hochauftriebsklappe bekannt, die mittels zumindest zweier in der Spannweitenrichtung des Tragflügels nebeneinander angeordneten Verstellmechanismen an dem Tragflügel bewegbar angeordnet ist, wobei jeder der Verstellmechanismen aus miteinander gelenkig verbundenen Hebeln unter Ausbildung von drei Gelenkachsen gebildet ist, deren Richtungen sich in einem gemeinsamen Pol treffen.

Aufgabe der Erfindung ist, einen Verstellmechanismus einer Verstellvorrichtung zur Ankopplung einer Verstellklappe und insbesondere einer Hochauftriebsklappe an einen Flügel oder Hauptflügel und eine solche Verstellvorrichtung bereitzustellen, deren Verstellvorrichtung kinematisch optimiert ist.

Diese Aufgabe wird mit den Merkmalen der unabhängigen Patentansprüche gelöst. Weitere Ausführungsformen sind in den auf diese rückbezogenen Unteransprüchen angegeben.

Nach einem Aspekt der Erfindung ist ein Verstellmechanismus einer Verstellvorrichtung zur Ankopplung einer Verstellklappe oder insbesondere einer Hochauftriebsklappe, also generell einer Klappe, an einen Hauptflügel eines Tragflügels und zur Verstellung der Hochauftriebsklappe vorgesehen. Der Verstellmechanismus weist insbesondere auf:
▪ einen ersten Verstellhebel, der über ein erstes Drehgelenk unter Ausbildung einer ersten Drehachse an dem Hauptflügel angelenkt ist,
▪ einen zweiten Verstellhebel,
▪ einen dritten Verstellhebel, der über ein zweites Drehgelenk gelenkig unter Ausbildung einer zweiten Drehachse mit an dem zweiten Verstellhebel und über ein viertes Drehgelenk gelenkig mit der Verstellklappe gekoppelt ist, wobei der erste Verstellhebel und der zweite Verstellhebel über ein mittleres Gelenk unter Ausbildung einer dritten Drehachse gelenkig miteinander gekoppelt sind und wobei die erste, zweite und dritte Drehachse in jeder Stellung der Verstellklappe durch einen gemeinsamen Pol verlaufen, und
▪ einen Zug-Druck-Stab, der über ein erstes Kugelgelenk mit dem zweiten Verstellhebel und über ein zweites Kugelgelenk mit der Verstellklappe verbunden ist.

Durch den erfindungsgemäßen Verstellmechanismus wird an der Anschlussstelle der zu verstellenden Verstellklappe oder Hochauftriebsklappe ein Ausfahren derselben auf einer Kreisbahn bei gleichzeitiger Rotation der Hochauftriebsklappe um eine klappenfeste, spannweitige Achse ausgeführt. Zur Ankopplung und Verstellung der Klappe an bzw. gegenüber dem Hauptflügel kann insbesondere vorgesehen sein, dass die Klappe mittels zwei oder mehr Verstellmechanismen an dem Hauptflügel angekoppelt ist. Die weiteren Verstellmechanismen können gleich oder unterschiedlich im Vergleich zu dem zuvor definierten Verstellmechanismus gestaltet sein.

Der erfindungsgemäße Verstellmechanismus kann insbesondere zur Ankopplung einer Hochauftriebsklappe in Form einer Hinterkantenklappe oder in Form einer Vorderkantenklappe und insbesondere einer Krügerklappe an einen Hauptflügel vorgesehen sein. Mit einem erfindungsgemäßen Verstellmechanismus ist dabei erreichbar, dass die Verstellklappe, wenn diese ausschließlich mit Verstellmechanismen in der vorgenannten Art am Hauptflügel angekoppelt ist, oder andernfalls zumindest die Anschlussstelle des Verstellmechanismus an der Hochauftriebsklappe von der eingefahrenen Stellung ("retracted position") der Klappe oder zumindest der Bereich der Anschlussstelle der Hochauftriebsklappe gegenüber dem Hauptflügel über eine Klappenstellung mit Spalt ("landing position") in eine abdichtende Stellung ("sealed take-off position") gefahren werden kann. Bei der abdichtenden Stellung ist zumindest im Bereich der Anschlussstelle die Klappe relativ zum Hauptflügel gelegen, dass keine oder eine in Bezug auf den Gesamtflügel aerodynamisch unwesentliche Luftströmung zwischen der Hochauftriebsklappe und dem Hauptflügel strömt.

Der erfindungsgemäße Verstellmechanismus hat generell den Vorteil, dass der Verstellmechanismus nur eine geringe Bauhöhe benötigt und somit auch in dünneren Flügelprofilen realisiert werden kann. Dies trifft insbesondere z.B. in Bezug auf einen Scherenmechanismus zu, die im Stand der Technik zur Ankopplung von Krügerklappen an einem Hauptflügel eingesetzt wird. Gegenüber der Schwanenhalskinematik hat der erfindungsgemäße Verstellmechanismus den Vorteil, dass dieser auch Drehachsen oder Drehpunkte der Klappe und insbesondere einer Klappe in Form einer Krügerklappe ermöglicht, welche nahe oder außerhalb der Flügelkontur liegen.

Nach der Erfindung ist vorgesehen: eine Verstellvorrichtung zur Verstellung einer Verstellklappe und insbesondere einer Hochauftriebsklappe an einem Tragflügel eines Flugzeugs mit zumindest zwei in der Spannweitenrichtung des Tragflügels nebeneinander angeordneten Verstellmechanismen und einer Antriebsvorrichtung zur Verstellung der Verstellklappe gegenüber dem Hauptflügel bewegbar angeordnet, wobei zumindest einer der Verstellmechanismen aufweist:
▪ einen ersten Verstellhebel, der über ein erstes Drehgelenk unter Ausbildung einer ersten Drehachse an dem Hauptflügel angelenkt ist,
▪ einen zweiten Verstellhebel,
▪ einen dritten Verstellhebel, der über ein zweites Drehgelenk gelenkig unter Ausbildung einer zweiten Drehachse an dem zweiten Verstellhebel und über ein viertes Drehgelenk gelenkig mit der Verstellklappe gekoppelt ist, wobei der erste Verstellhebel und der zweite Verstellhebel über ein mittleres Gelenk unter Ausbildung einer dritten Drehachse gelenkig miteinander gekoppelt sind und wobei die erste, zweite und dritte Drehachse in jeder Stellung der Verstellklappe durch einen gemeinsamen Pol verlaufen,
▪ einen Zug-Druck-Stab, der über ein erstes Kugelgelenk mit dem zweiten Verstellhebel und über ein zweites Kugelgelenk mit der Verstellklappe verbunden ist.

Dabei kann vorgesehen sein, dass das vierte Drehgelenk des Verstellmechanismus als Scharniergelenk ausgebildet ist, um die Anzahl der Freiheitsgrade der Lagerung der Verstellklappe zu reduzieren Festlager wirkt.

Alternativ kann vorgesehen sein, dass das vierte Drehgelenk des Verstellmechanismus als sphärisches Drehgelenk ausgebildet ist, um die Anzahl der Freiheitsgrade der Lagerung der Verstellklappe zu erhöhen.

Die Verstellvorrichtung kann einen weiteren Verstellmechanismus aufweisen, aufweisend:
▪ einen ersten Verstellhebel, der über ein erstes Drehgelenk unter Ausbildung einer ersten Drehachse an dem Hauptflügel angelenkt ist,
▪ einen zweiten Verstellhebel, der über ein zweites Drehgelenk unter Ausbildung einer zweiten Drehachse an der Verstellklappe angelenkt ist,
wobei der erste und der zweite Verstellhebel über ein mittleres Gelenk unter Ausbildung einer dritten Drehachse gelenkig miteinander verbunden sind und wobei die erste, zweite und dritte Drehachse in jeder Stellung der Verstellklappe durch einen gemeinsamen Pol verlaufen.

Je nach den Erfordernissen des jeweiligen Anwendungsfalls kann in einem speziellen Anwendungsfall an nur einer Station der Klappe der erfindungsgemäße Verstellmechanismus realisiert sein und eine zweite Station mit einem andersartigen Verstellmechanismus realisiert sein, der dieselbe oder eine andersartige Aus- und Einfahr-Charakteristik hat.

Weiterhin kann eine oder gegebenenfalls mehrere der weiteren Verstellmechanismen ohne den Zug-Druck-Stab ausgeführt sein.

Durch das Vorsehen von Verstellmechanismen zur Ankopplung der Verstellklappe mit dem dritten Verstellhebel in Verbindung mit dem Zug-Druck-Stab ist es möglich, den gleichen Verstellmechanismus mehrfach an einer Hochauftriebsklappe vorzusehen und dabei mit den Verstellmechanismen jeweils unterschiedliche Lagereigenschaften zu realisieren. Beispielsweise kann eine Klappe mit zumindest zwei Verstellmechanismen an einem Hauptflügel angekoppelt sein, wobei die Verstellmechanismen die Klappe überbestimmt oder bestimmt an dem Hauptflügel lagern. Bei der überbestimmten Lagerung ergibt sich eine größere mechanische Redundanz und somit eine größere mechanische Sicherheit, wodurch jedoch innere Spannungen in der Klappe entstehen. Durch die bestimmte Lagerung können dagegen innere Spannungen in der Klappe reduziert werden.

Bei der Verwendung von zwei oder mehr als zwei Verstellmechanismen mit drei jeweils miteinander gekoppelten Verstellhebel, können zu diesem Zweck die Verstellmechanismen jeweils mit mehr oder weniger Lagerungs-Freiheitsgraden an der Lagerung der Verstellklappe am dritten Verstellhebel realisiert sein, um die Verstellklappe insgesamt bestimmt oder überbestimmt an den Verstellmechanismen zu lagern.

Dabei kann das vierte Drehgelenk von einem oder mehreren oder sämtlichen Verstellmechanismen der Verstellvorrichtung als sphärisches Drehgelenk oder Kugelgelenk ausgebildet sein. In Verbindung mit dem an beiden Enden mit einem sphärischen Drehgelenk oder Kugelgelenk gelagerten Zug-Druck-Stab wird gegenüber einer nur die Drehung um eine Achse zulassenden Scharniergelenk ein zusätzlicher Freiheitsgrad der Lagerung der Verstellklappen-Anschlussstelle an dem dritten Stellhebel erreicht, so dass in dieser Hinsicht der Verstellmechanismus als Loslager gestaltet ist: Durch diese Realisierungsform erhält der dritte Verstellhebel die Funktion einer Pendelstütze ("swing link"), wobei durch das Kugelgelenk und den Zug-Druck-Stab die Lage der Loslager-Kinematik eindeutig bestimmt ist, wobei spannweitige Kraftkomponenten oder in der Spannweitenrichtung der Verstellklappe gerichtete Kraftkomponenten der Verstellklappe nicht an den Hauptflügel weitergegeben werden.

Auch kann vorgesehen sein, dass das vierte Drehgelenk von einem oder mehreren oder sämtlichen Verstellmechanismen der Verstellvorrichtung als reines Drehgelenk oder als Scharniergelenk ausgebildet ist, das keinen translatorischen Freiheitsgrad in der axialen Richtung des Scharniergelenks zulässt. Der translatorische Freiheitsgrad kann dabei insbesondere derart definiert sein, dass die zugelassene translatorische Bewegung derart gerichtet ist, dass diese eine Bewegungskomponente in der Spannweitenrichtung der Klappe oder des Hauptflügels hat. Diese Art der Lagerung kann mit dem mit dem an beiden Enden mit einem sphärischen Drehgelenk oder Kugelgelenk gelagerten Zug-Druck-Stab oder ohne diesen vorgesehen sein. In beiden Fällen wird eine Lagerung der Verstellklappe am dritten Verstellhebel realisiert, die einen Freiheitsgrad weniger hat als die vorgenannte Pendelstützen-Lagerung. Wenn mehrere oder sämtliche Verstellmechanismen der Verstellvorrichtung in dieser Weise gestaltet sind, ergibt sich eine überbestimmte Lagerung der Klappe an den Verstellmechanismen und somit an dem Hauptflügel.

Eine bestimmte Lagerung der Hochauftriebsklappe am Hauptflügel ergibt sich, wenn z.B. die Klappe mittels zwei erfindungsgemäßen Verstellmechanismen am Hauptflügel angekoppelt ist und dabei ein Verstellmechanismus mit einem vierten Gelenk, reines Drehgelenk oder als Scharniergelenk ausgebildet ist, das keinen translatorischen Freiheitsgrad in der axialen Richtung des Scharniergelenks zulässt, und der andere Verstellmechanismus ein als sphärisches Drehgelenk oder Kugelgelenk ausgebildetes viertes Gelenk aufweist.

Nach einem Ausführungsbeispiel der Erfindung kann die Verstellvorrichtung derart ausgeführt sein, dass das vierte Drehgelenk eines Verstellmechanismus als sphärisches Drehgelenk ausgebildet ist, so dass dieses in der Spannweitenrichtung der Hochauftriebsklappe als Loslager wirkt, und dass das vierte Drehgelenk des zumindest einen weiteren Verstellmechanismus oder sämtlicher weiteren Verstellmechanismen als Scharniergelenk mit oder ohne Zug-Druck-Stab ausgebildet ist, so dass dieses in der Spannweitenrichtung der Hochauftriebsklappe als Festlager wirkt. Dieser Verstellmechanismus übt dabei eine "Master-Funktion" in der Verstellvorrichtung aus, da dieser Kraftkomponenten, die in der Spannweitenrichtung der Verstellklappe gerichtet sind, auf die Verstellhebel und somit den Hauptflügel überträgt. Ein weiterer Verstellmechanismus oder gegebenenfalls die weiteren Verstellmechanismen können derart ausgeführt sein, dass der Zug-Druck-Stab an einem Verstellmechanismus angeordnet ist, dessen viertes Drehgelenk als sphärisches Drehgelenk ausgebildet ist. Dieser Verstellmechanismus übt dabei eine "Slave-Funktion" in der Verstellvorrichtung aus, da dieser einen Freiheitsgrad mehr zulässt als der vorgenannte Verstellmechanismus. Bei einem Ausführungsbeispiel ist zumindest einer der Verstellmechanismen derart mit einem vierten Drehgelenk als sphärisches Drehgelenk und dem Zug-Druck-Stab ausgebildet und ein weiterer Verstellmechanismus mit einem vierten Drehgelenk als sphärisches Drehgelenk ohne Zug-Druck-Stab oder als Scharniergelenk ohne Zulassen einer translatorischen Bewegung des dritten Verstellhebels in der axialen Richtung des Gelenks ausgebildet.

Alternativ dazu kann der Zug-Druck-Stab auch an einem oder mehreren Verstellmechanismen mit einem Scharniergelenk angeordnet sein, um die Steifigkeit der Ankopplung der Klappe am Hauptflügel und die mechanische Redundanz und Sicherheit der gesamten Verstellvorrichtung zu erhöhen.

Zumindest ein Verstellmechanismus mit einer Master-Funktion hinsichtlich der Übertragung von Kräften und/oder Momenten der klappe auf den Hauptflügel kann auch durch eine Pyramidenverstellmechanismus mit zwei Verstellhebeln realisiert sein, die mittels eines Scharniergelenks mit einem rotatorischen Freiheitsgrad miteinander und mit der Verstellklappe bzw. dem Hauptflügel gekoppelt sind.

Nach einem weiteren Aspekt der Erfindung ist eine Verstellvorrichtung zur Verstellung einer Hochauftriebsklappe an einem Tragflügel eines Flugzeugs mit zumindest zwei in der Spannweitenrichtung des Tragflügels nebeneinander angeordneten Verstellmechanismen und einer Antriebsvorrichtung zur Verstellung der Hochauftriebsklappe gegenüber dem Hauptflügel vorgesehen. Dabei weist jeder der Verstellmechanismen auf: einen ersten Verstellhebel, der über ein erstes Drehgelenk unter Ausbildung einer ersten Drehachse an dem Hauptflügel angelenkt ist, und einen zweiten Verstellhebel, der über ein zweites Drehgelenk unter Ausbildung einer zweiten Drehachse an der Hochauftriebsklappe angelenkt ist.

Der erste und der zweite Verstellhebel jeder der bezeichneten Verstellmechanismen ist über ein mittleres Gelenk unter Ausbildung einer dritten Drehachse gelenkig miteinander verbunden. Dabei verlaufen die erste, zweite und dritte Drehachse in jeder Stellung der Hochauftriebsklappe durch einen gemeinsamen Pol.

Erfindungsgemäß ist also vorgesehen, dass zumindest einer der Verstellmechanismen aufweist:
▪ einen dritten Verstellhebel, über den der zweite Verstellhebel an der Hochauftriebsklappe angelenkt ist, wobei der dritte Verstellhebel über das zweite Drehgelenk gelenkig mit dem zweiten Verstellhebel und über ein viertes Drehgelenk gelenkig mit der Hochauftriebsklappe verbunden ist, und
▪ einen Zug-Druck-Stab oder einen Verbindungshebel, der über ein erstes Kugelgelenk mit dem zweiten Verstellhebel und über ein zweites Kugelgelenk mit der Hochauftriebsklappe verbunden ist.

Nach einem Ausführungsbeispiel der erfindungsgemäßen Verstellvorrichtung kann diese derart ausgeführt sein, dass das vierte Drehgelenk des zumindest einen weiteren Verstellmechanismus als sphärisches Drehgelenk ausgebildet ist, so dass dieses in der Spannweitenrichtung der Hochauftriebsklappe als Loslager oder als Lager mit Slave-Funktion oder mit größeren Freiheitsgraden als die zumindest einen weiteren Verstellmechanismus wirkt.

Ein weiterer Verstellmechanismus oder die weiteren Verstellmechanismen der Verstellvorrichtung kann mit den drei Verstellhebeln realisiert sind, wobei das vierte Drehgelenk zumindest eines Verstellmechanismus als Scharniergelenk ausgebildet ist, so dass dieses in der Spannweitenrichtung der Hochauftriebsklappe als Festlager mit Master-Funktion wirkt.

Alternativ kann bei einem solchen Verstellmechanismus das vierte Drehgelenk als Scharniergelenk ausgebildet sein, das eine Längsverschiebung in axialer Richtung zulässt, so dass dieser Verstellmechanismus als Loslager mit Slave-Funktion wirkt.

Somit kann die erfindungsgemäße Verstellvorrichtung derart ausgeführt sein, dass diese einen Verstellmechanismus mit einer Master-Funktion und zumindest einen weiteren Verstellmechanismus aufweist, der eine Slave-Funktion ausübt. Dabei kann - wie zuvor beschrieben wurde - weiterhin vorgesehen sein, dass nur einer oder mehrere der Verstellmechanismen nach der Erfindung ausgeführt sind.

Nach einem Ausführungsbeispiel der erfindungsgemäßen Verstellvorrichtung kann diese derart ausgeführt sein, dass mehrere der Verstellmechanismen der Verstellvorrichtung jeweils einen Zug-Druck-Stab aufweisen, der jeweils über ein erstes Kugelgelenk mit dem zweiten Verstellhebel und über ein zweites Kugelgelenk mit der Hochauftriebsklappe verbunden ist.

Die Hochauftriebsklappe kann insbesondere ein Vorflügel sein. Weiterhin kann der Vorflügel eine Krügerklappe sein, die in seiner eingefahrenen Stellung an der Unterseite des Hauptflügels gelegen ist. Auch kann der Vorflügel ein Slat sein. Alternativ dazu kann nach der Erfindung vorgesehen sein, dass die Hochauftriebsklappe eine Hinterkanten-Klappe ist.

Die Antriebsvorrichtung kann erfindungsgemäß aus einem Linearantrieb gebildet sein. Alternativ dazu kann die Antriebsvorrichtung aus einem Drehantrieb gebildet sein.

Nach einem weiteren erfindungsgemäßen Ausführungsbeispiel ist vorgesehen, dass der Tragflügel eine Anschlagvorrichtung zur Begrenzung der maximalen Ausfahrstellung der Hochauftriebsklappe aufweist und die Anschlagvorrichtung mit einem zwischen dem ersten und dem zweiten Verstellhebel wirkenden Anschlaghebel gebildet ist, der einstückig mit dem ersten Verstellhebel oder mit dem zweiten Verstellhebel und als Verlängerung desselben in Richtung zur zweiten Achse oder zur ersten Achse gebildet ist und der derart gestaltet ist, dass das freie Ende des Anschlagshebels in eine Anschlagstellung mit einer Auflagevorrichtung am zweiten Verstellhebel oder am ersten Verstellhebel gebracht werden kann, um die maximale Ausfahrstellung des jeweiligen Verstellmechanismus zu definieren.

Weiterhin kann nach einem weiteren erfindungsgemäßen Ausführungsbeispiel vorgesehen sein, dass der Tragflügel eine Anschlagvorrichtung zur Begrenzung der maximalen Ausfahrstellung der Hochauftriebsklappe aufweist und die Anschlagvorrichtung mit einem Anschlaghebel zur Begrenzung der maximalen Ausfahrstellung der Hochauftriebsklappe gebildet ist, der einstückig mit dem ersten Verstellhebel oder mit einem Beschlag des Hauptflügels und als Verlängerung desselben in Richtung zu dem Beschlag des Hauptflügels oder zum dritten Gelenk gebildet ist und der derart gestaltet ist, dass das freie Ende des Anschlagshebels in eine Anschlagstellung mit dem Beschlag des Hauptflügels oder dem ersten Verstellhebel gebracht werden kann, um die maximale Ausfahrstellung des jeweiligen Verstellmechanismus zu definieren.

Erfindungsgemäß kann auch vorgesehen sein, dass der Tragflügel eine Anschlagvorrichtung zur Begrenzung der maximalen Ausfahrstellung der Hochauftriebsklappe aufweist und die Anschlagvorrichtung mit einem Anschlaghebel zur Begrenzung der maximalen Ausfahrstellung der Hochauftriebsklappe gebildet ist, der einstückig mit dem zweiten Verstellhebel oder mit einem Beschlag der Hochauftriebsklappe und als Verlängerung desselben in Richtung zu dem Beschlag der Hochauftriebsklappe oder zum dritten Gelenk gebildet ist und der derart gestaltet ist, dass das freie Ende des Anschlagshebels in eine Anschlagstellung mit dem Beschlag der Hochauftriebsklappe oder dem zweiten Verstellhebel gebracht werden kann, um die maximale Ausfahrstellung des jeweiligen Verstellmechanismus zu definieren.

Die Anschlagvorrichtung kann insbesondere derart ausgeführt sein, dass mit dieser eine maximale Ausfahrstellung des Vorflügels begrenzt wird, bei der die Wirkungsrichtungen der Verstellhebel zueinander einen Winkel (alpha) von weniger als 180 Grad haben. Auch kann vorgesehen sein, dass mit dem Anschlagshebel eine Federvorrichtung zusammenwirkt, um eine Rückstellkraft auf den Verstellmechanismus auszuüben und/oder das Erreichen der maximalen Ausfahrstellung des jeweiligen Verstellmechanismus abzufedern.

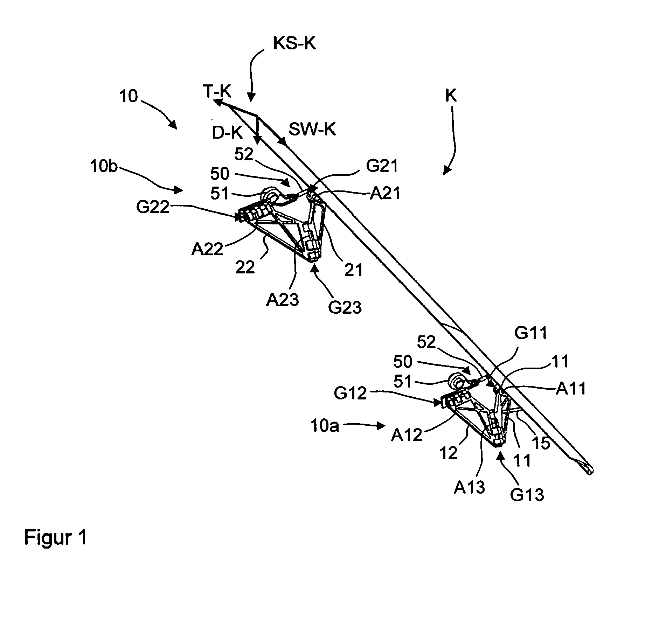

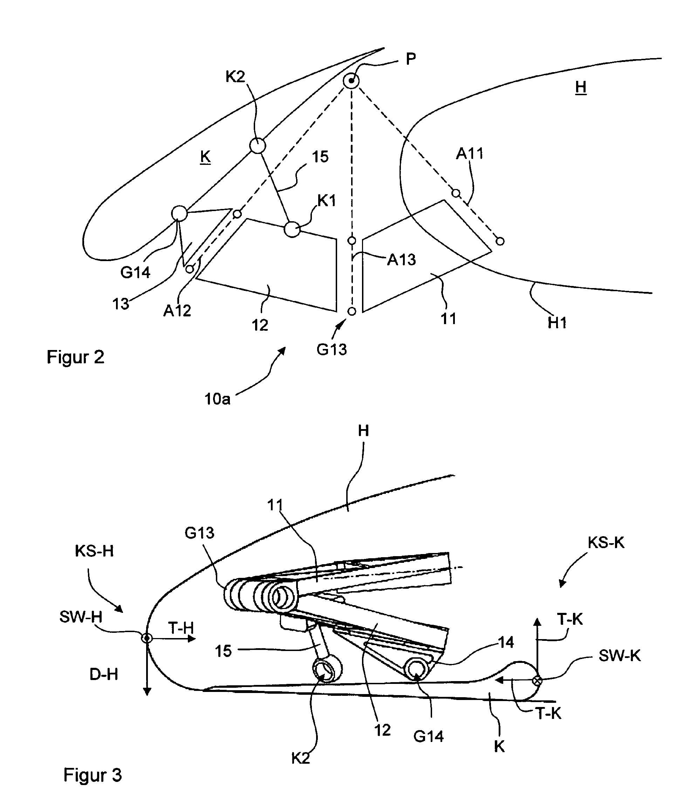

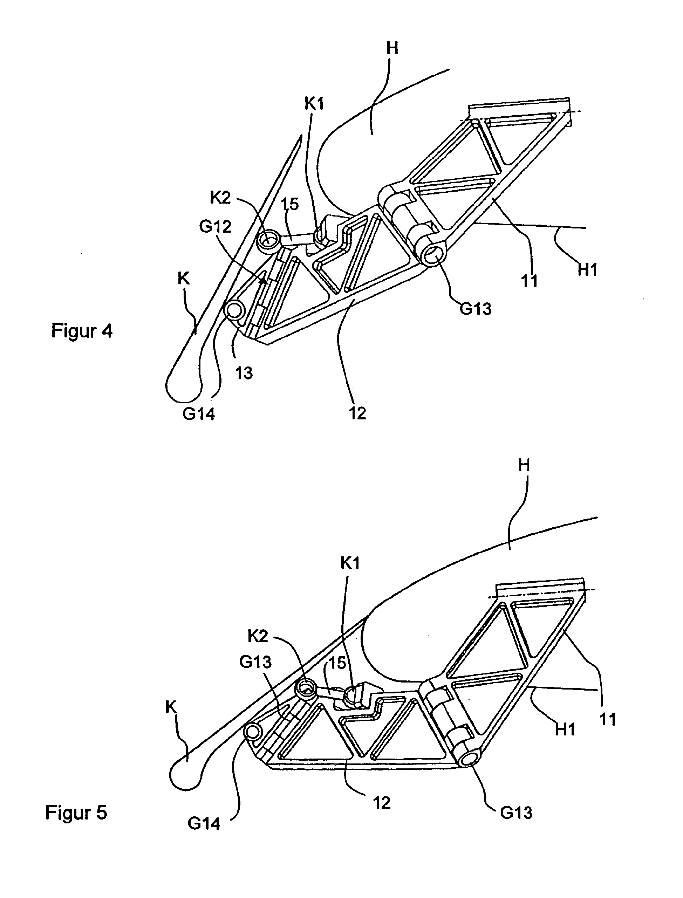

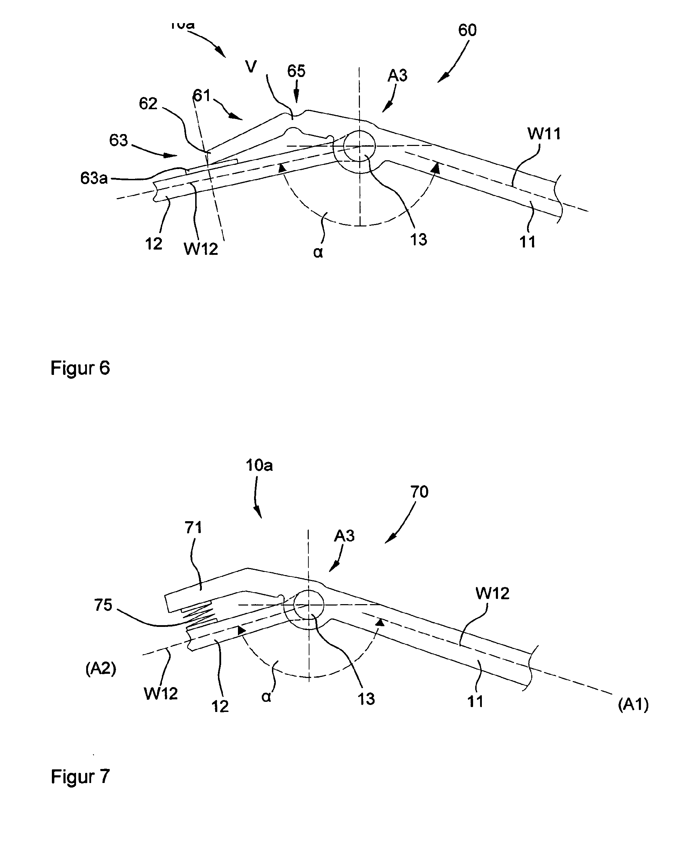

Im Folgenden werden Ausführungsbeispiele der Erfindung an Hand der beigefügten Figuren beschrieben, die zeigen:
▪ Figur 1 eine schematische perspektivische Darstellung eines Ausführungsbeispiels einer an einem Hauptflügel eines erfindungsgemäßen Tragflügels anzuordnenden Hochauftriebsklappe in Form eines Vorflügels, der mittels zwei Verstellmechanismen an dem Hauptflügel bewegbar angeordnet ist,
▪ Figur 2 eine schematische Prinzipdarstellung eines erfindungsgemäßen Ausführungsbeispiels eines der Verstellmechanismen mit einem ersten, einem zweiten und einem dritten Hebel sowie einem Verbindungshebel, der über ein erstes Kugelgelenk mit dem zweiten Verstellhebel und über ein zweites Kugelgelenk mit der Hochauftriebsklappe verbunden ist,
▪ Figur 3 eine schematische perspektivische Seitendarstellung eines der Verstellmechanismen, der nach der Prinzipdarstellung der Figur 2 gebildet ist, in einem Zustand, bei dem sich die Hochauftriebsklappe in ihrer eingefahrenen Stellung befindet,
▪ Figur 4 eine schematische perspektivische Seitendarstellung des Verstellmechanismus nach der Figur 3 in einem Zustand, bei dem sich die Hochauftriebsklappe in einer mittleren ausgefahrenen Stellung befindet,
▪ Figur 5 eine schematische perspektivische Seitendarstellung des Verstellmechanismus nach der Figur 3 in einem Zustand, bei dem sich die Hochauftriebsklappe in ihrer vollständig ausgefahrenen Stellung befindet,
▪ Figur 6 eine Schnittdarstellung eines Ausführungsbeispiels einer Anschlagvorrichtung zur Begrenzung der maximalen Ausfahrstellung der Hochauftriebsklappe, und
▪ Figur 7 eine Schnittdarstellung eines weiteren Ausführungsbeispiels einer Anschlagvorrichtung zur Begrenzung der maximalen Ausfahrstellung der Hochauftriebsklappe.

In der Figur 1 ist in schematischer Weise ein Ausführungsbeispiel des erfindungsgemäßen Tragflügels T mit einem Hauptflügel H einer Hochauftriebsklappe K dargestellt. Die Hochauftriebsklappe K ist mittels einer Verstellvorrichtung 10 mit zumindest zwei Verstellmechanismen 10a, 10b an dem Hauptflügel H angeordnet, die in der Spannweitenrichtung H-SW des Hauptflügels H oder in der Spannweitenrichtung K-SW der Hochauftriebsklappe K nebeneinander angeordnet sind. Die Hochauftriebsklappe K kann erfindungsgemäß ein Vorflügel oder eine Hinterkanten-Klappe sein.

In der Figur 1 ist die Hochauftriebsklappe K ein Vorflügel, der als Slat ausgebildet ist. Erfindungsgemäß kann der Vorflügel auch eine Krüger-Klappe sein, die in seiner eingefahrenen Stellung an der Unterseite H1 des Hauptflügels H gelegen ist. Der Vorflügel K ist in der Figur 1 einer ausgefahrenen Stellung dargestellt. In der Figur 1 sind zur Veranschaulichung des erfindungsgemäßen Funktionsprinzips an dem dargestellten Ausschnitt des Hauptflügels H und des Vorflügels K zwei Verstellmechanismen 10a, 10b dargestellt. Auch ist in der Figur 1 ein Koordinatensystem KS-H für den Hauptflügel H mit der Hauptflügel-Spannweitenrichtung SW-H, der Hauptflügel-Tiefenrichtung T-H und der Hauptflügel-Dickenrichtung D-H als Koordinatenachsen sowie ein Koordinatensystem KS-K für die Hochauftriebsklappe K mit der Hochauftriebsklappen-Spannweitenrichtung SW-K, der Hochauftriebsktappen-Tiefenrichtung T-K und der Hochauftriebsklappen-Dickenrichtung D-K als Koordinatenachsen eingetragen.

In der Figur 1 ist die darin dargestellte Hochauftriebsklappe K bzw. der Vorflügel, der mittels der zumindest zwei Verstellmechanismen 10a, 10b an dem Hauptflügel zwischen einer eingefahrenen und einer ausgefahrenen Stellung bewegbar angeordnet ist, in einer ausgefahrenen Stellung gezeigt, wobei die dargestellte Ausfahrstellung nicht die maximale Ausfahrstellung der Hochauftriebsklappe K bzw. des Vorflügels ist.

Wie aus der Figur 1 ersichtlich ist, weist der erste Verstellmechanismus 10a der Verstellvorrichtung 10 insbesondere auf:
▪ einen ersten Verstellhebel 11, der über ein erstes Drehgelenk G11 unter Ausbildung einer ersten Drehachse A11 an dem Hauptflügel H angelenkt ist, wobei die Drehachse G11 des ersten Drehgelenks 13 quer oder winklig zur Hauptflügel-Spannweitenrichtung SW-H und Hauptflügel-Tiefenrichtung T-H verläuft,
▪ einen zweiten Verstellhebel 12, der über ein zweites Drehgelenk G 12 unter Ausbildung einer zweiten Drehachse A12 an der Hochauftriebsklappe K bzw. dem Vorflügel angelenkt ist, wobei die Drehachse A12 des zweiten Drehgelenks G 12 quer oder winklig zur Hochauftriebsklappen-Spannweitenrichtung SW-K und Hochauftriebsklappen-Dickenrichtung D-K verläuft,
▪ ein mittleres Gelenk G13, der den ersten 11 und den zweiten 12 Verstellhebel unter Ausbildung einer dritten Drehachse A13 gelenkig miteinander verbindet.

Erfindungsgemäß treffen sich die Richtungen der ersten, zweiten und dritten Drehachse A11, A12 bzw. A13 des ersten Verstellmechanismus 10a unabhängig von der Stellung der Hochauftriebsklappe K bzw. des Vorflügels in einem gemeinsamen Pol P. die Verstellvorrichtung kann derart vorgesehen sein, dass Pol P bei dem Verstellen der Hochauftriebsklappe K in Bezug auf die Lage des Hauptflügels fix, d.h. ist. Dadurch führt die Hochauftriebsklappe K gegenüber dem Hauptflügel H eine Bewegung mit einer teilkreisförmigen Bewegungsbahn auf, wenn diese von ihrer eingefahrenen in die ausgefahrene Stellung und umgekehrt bewegt wird.

Erfindungsgemäß ist bei zumindest einem der Verstellmechanismen an dem zweiten Verstellhebel 12 ein dritter Verstellhebel 13 angekoppelt, der wiederum an der Hochauftriebsklappe K angelenkt ist, d.h. der jeweilige Verstellmechanismus weist einen dritten Verstellhebel 13 auf, über den der zweite Verstellhebel 12 an der Hochauftriebsklappe K angelenkt ist. Dabei ist der dritte Verstellhebel 13 über das zweite Drehgelenk G12 gelenkig mit dem zweiten Verstellhebel 12 und über ein viertes Drehgelenk G14 gelenkig mit der Hochauftriebsklappe K verbunden. Das Drehgelenk G14 kann als Drehgelenk mit einer Drehachse, also als Scharniergelenk ausgeführt sein. Dabei kann das als Scharniergelenk ausgeführte Drehgelenk G14 je nach Anwendungsfall derart ausgeführt sein, dass der Übertragungshebel 13 gegenüber der Klappe K zumindest in vorbestimmten Grenzen in Längsrichtung der Drehachse des Gelenks G14 längsverschiebbar ist, so dass das derart ausgeführte Drehgelenk G14 als Loslager wirkt. Das Drehgelenk G14 kann auch als Scharniergelenk derart ausgeführt sein, so dass dieses keine Bewegung des Übertragungshebels 13 in Längsrichtung der Drehachse des Gelenks G14 zulässt. Alternativ kann das Drehgelenk G14 als sphärisches Drehgelenk G14 ausgeführt sein, so dass dieses quer zur Hebel-Wirklinie des Übertragungshebels 13 gesehen als Festlager wirkt. In der Figur 1 ist der dritte Verstellhebel 13 nur durch einen Pfeil als Bestandteil der ersten Verstellmechanismus 10a angedeutet und nicht als Funktionsteil dargestellt. In der Figur 2, die eine funktionale Prinzipdarstellung eines ersten Verstellmechanismus 10a ist, ist der dritte Verstellhebel 13 dargestellt.

Wie aus den Figuren 1 und 2 erkennbar ist, weist der erste Verstellmechanismus 10a einen Zug-Druck-Stab 15 auf, der über ein erstes Kugelgelenk K1 mit dem zweiten Verstellhebel 12 und über ein zweites Kugelgelenk K2 mit der Hochauftriebsklappe K verbunden ist.

Der in der Figur 1 gezeigte zweite Verstellmechanismus 10b der Verstellvorrichtung 10 weist auf:
▪ einen ersten Verstellhebel 21, der über ein erstes Drehgelenk G21 unter Ausbildung einer ersten Drehachse A21 an dem Hauptflügel H angelenkt ist, wobei die Drehachse A21 des ersten Drehgelenks G21 quer oder winklig zur Hauptflügel-Spannweitenrichtung SW-H und Hauptflügel-Tiefenrichtung T-H verläuft,
▪ einen zweiten Verstellhebel 22, der über ein zweites Drehgelenk G22 unter Ausbildung einer zweiten Drehachse A22 an der Hochauftriebsklappe K bzw. dem Vorflügel angelenkt ist, wobei die Drehachse A22 des zweiten Drehgelenks G22 quer oder winklig zur Hochauftriebsklappen-Spannweitenrichtung SW-K und Hochauftriebsklappen-Dickenrichtung D-K verläuft,
▪ ein mittleres Gelenk G23, der den ersten 21 und den zweiten 22 Verstellhebel unter Ausbildung einer dritten Drehachse A23 gelenkig miteinander verbindet.

Erfindungsgemäß treffen sich die Richtungen der ersten, zweiten und dritten Drehachse A1, A2 bzw. A3 des zweiten Verstellmechanismus 10b unabhängig von der Stellung der Hochauftriebsklappe K bzw. des Vorflügels n einem gemeinsamen Pol P. In einem speziellen Ausführungsbeispiel des zweiten Verstellmechanismus kann dieser derart gestaltet sein, dass der gemeinsame Pol P bei dem Verstellen der Hochauftriebsklappe K in Bezug auf die Lage des Hauptflügels fix, d.h. unabhängig von der Stellung der Hochauftriebsklappe K bzw. des Vorflügels ist.

Der Antrieb der Verstellvorrichtung zu deren Verstellung kann erfindungsgemäß in verschiedener Weise ausgeführt sein. Die Antriebsvorrichtung 50 kann generell z.B. aus einem Linearantrieb oder aus einem Drehantrieb gebildet sein. Dabei kann insbesondere vorgesehen sein,
▪ dass der Tragflügel T eine Antriebsvorrichtung 50 mit einem am Hauptflügel H gelagerten Antriebsmodul 51 und einem zu diesem bewegbaren Antriebshebel 52 aufweist, der an der Hochauftriebsklappe K angekoppelt ist, und
▪ dass der Tragflügel T eine Anschlagvorrichtung 60 zur Begrenzung der maximalen Ausfahrstellung der Hochauftriebsklappe K bzw. des Vorflügels aufweist.

Alternativ kann vorgesehen sein, dass die Antriebsvorrichtung auf einen der Verstellhebel der Verstellvorrichtung 10 wirkt und diesen verstellt, um die Verstellvorrichtung zu verstellen. Dabei kann vorgesehen sein, dass die Antriebsvorrichtung als Linearantrieb ausgebildet ist und an den Gelenken des ersten und zweiten Verstellmechanismus angekoppelt sein, mit jeweils den ersten und den zweiten Verstellhebel eine Verstellmechanismus miteinander gelenkig verbinden. Auch kann vorgesehen sein, dass die Antriebsvorrichtung als Linearantrieb ausgebildet ist und zwischen zwei Verstellhebeln verschiedener Verstellmechanismen 10a, 10b angeordnet und an diesen angekoppelt ist. Durch Auseinanderfahren und Zusammenfahren (Kontrahieren) des Linearantriebs der Antriebsvorrichtung werden die beiden durch diesen gekoppelten Verstellhebel auseinander bzw. zusammen gedrückt und dabei die Verstellvorrichtung in einen eingefahrenen bzw. ausgefahrenen Zustand bewegt. Dabei kann die Antriebsvorrichtung zwischen einem ersten Verstellhebel des ersten Verstellmechanismus und einem zweiten Verstellhebel des zweiten Verstellmechanismus und umgekehrt angekoppelt sein.

Erfindungsgemäß wird bei zumindest einem Verstellmechanismus 10a, 10b einer Verstellvorrichtung 10 ein Gelenk-Zwischenteil Z mit einem Grundkörper Z1 verwendet. Insbesondere wird das Gelenk-Zwischenteil Z an genau einem Verstellmechanismus 10a, 10b einer Verstellvorrichtung 10 verwendet.

Durch die Ausbildung der Anschlussverbindung des dritten Verstellhebels mit der Hochauftriebsklappe K über ein Kugelgelenk oder sphärisches Gelenk sowie durch die Ankoppelung des Zug-Druck-Stabs 15 (in der Figur 1 nur an der Verstellmechanismus 10a gezeigt), der über ein erstes Kugelgelenk K1 mit dem zweiten Verstellhebel 12 und über ein zweites Kugelgelenk K2 mit der Hochauftriebsklappe K gekoppelt ist, wird ein Loslager mit einer "Slave-Funktion" realisiert. Demgegenüber wird bei einem Verstellmechanismus mit zwei Verstellhebeln, die - wie an Hand der in der Figur 1 dargestellten zweiten Verstellmechanismus 10b dargestellt - über Scharniergelenke miteinander oder mit dem Hauptflügel oder der Hochauftriebsklappe gekoppelt sind, eine Fest-Lagerung des jeweiligen Verstellmechanismus an die Hochauftriebklappe K mit einer "Master-Funktion" bereitgestellt. Ein Verstellmechanismus mit einem Festlager kann in einem erfindungsgemäßen Ausführungsbeispiel auch mit einem ersten und einem zweiten Übertragungshebel gebildet sein. wobei der erste Übertragungshebel über ein Scharniergelenk direkt am Hauptflügel und der zweite Übertragungshebel angekoppelt ist.

Bei einer Verstellvorrichtung mit zwei sogenannten Pyramiden-Verstellmechanismen mit jeweils einem kinematischen Pol P kann durch eine entsprechende Gestaltung der Verstellmechanismen hinsichtlich der Bereitstellung von kinematischen Freiheitsgraden an dem jeweiligen Verstellmechanismus innere Kräfte bzw. Strukturspannungen minimiert werden, die aufgrund von in dem Hauptflügel, der Verstellklappe K und/oder den Verstellmechanismen auftretenden Zwangskräften entstehen und/oder aufgrund der bei der Verstellung der Verstellvorrichtung mittels der Antriebsvorrichtung entstehenden Kräften auftreten. Solche innere Kräfte bzw. Strukturspannungen können insbesondere aufgrund der Verformung des Hauptflügels und/oder der Hochauftriebsklappe K bei auftretenden äußeren Kräften, z.B. Luftkräften, entstehen. Durch die erfindungsgemäße Lösung können die Strukturteile der erfindungsgemäße Verstellvorrichtung bzw. des erfindungsgemäßen Tragflügels T günstiger ausgelegt werden.

Der Pol P ist der Drehpunkt oder die im dreidimensionalen Raum definierte Drehachse G14, wobei der Pol P insbesondere nahe oder auch außerhalb der Flügelkontur und/oder der Klappenkontur positioniert sein kann. Die Kinematik erzwingt eine Drehung des Übertragungshebels 11 um die flügelfeste Achse A11. Am Übertragungshebel 11 ist der Übertragungshebels 12 um die Achse A13 drehbar angelenkt. Der Übertragungshebel 13, welcher an die Pyramiden-Kinematik mit den Drehachsen A11, A12, A13 anschließt, ist drehbar um die Achse A13 mit dem Übertragungshebel 12 gekoppelt. Die Verlängerungen aller drei Achsen A11, A12, A13 haben den gemeinsamen Schnittpunkt P in der Kinematikebene. Die Achsen A113 und A11 als auch der die Achse oder der Achsenpunkt des Gelenks G14 liegen in der Kinematikebene. Hierbei ist die Achse oder der Achsenpunkt des Gelenks G14 der Schnittpunkt der zum Übertragungshebel 13 und der Klappe K momentfesten Achse oder der Achsenpunkt des Gelenks G14 mit der Kinematikebene. Der Übertragungshebel 13 kann sich aus der Kinematikebene herausbewegen.

Bei Verwendung von mehreren Pyramiden-Kinematiken an einer Klappe, liegen die Pole der jeweiligen Pyramiden-Kinematiken auf einer Linie entlang der Klappe und theoretisch auf einer Geraden. Dabei kann insbesondere die Achse des Gelenks, sofern dieses als Scharniergelenk ausgeführt ist, parallel zu dieser Linie.

Bei der Ausführung der Verstellvorrichtung mit zwei Verstellmechanismen in der Ausführung jeweils als Pyramiden-Kinematik kommt es aufgrund der genannten Lagebedingungen zu einer Änderung des Winkels zwischen dem Übertragungshebel 12 und dem Übertragungshebel 13. Da das erste Kugelgelenk K1 lagefest am zweiten Übertragungshebel 12 und das zweite Kugelgelenk K2 lagefest an der Klappe K angeordnet ist, wird der Zug-Druck-Stab 15 aufgrund der Relativbewegung zwischen der Klappe K und der Pyramiden-Kinematik die Klappe K zur Rotation mittels des Gelenks G14 um eine klappenfeste Achse.

Bei der Ausführung der Verstellvorrichtung mit mehr als zwei Verstellmechanismen in der Ausführung derselben als Pyramiden-Kinematiken mit jeweils drei Stellhebel liegen die Drehpunkte des Gelenks G14 in der Ausführung als Drehgelenke auf einer Linie, wobei die Linie eine Gerade ist, wenn die Verformung der Klappe K nicht berücksichtigt wird. Bei der Ausführung des Gelenks G14 als Scharniergelenke kann insbesondere vorgesehen sein, dass die Drehachsen der Scharniergelenke auf einer Gerade liegen oder zumindest parallel zueinander verlaufen, wenn die Verformung der Klappe K nicht berücksichtigt wird.

Bei der Gestaltung der Verstellvorrichtung Fest-Los-Lager Konzept ist in Hinsicht auf ein oder zumindest ein Verstellmechanismus als Loslager (Slave-Funktion) und ein oder zumindest ein Verstellmechanismus als Festlager (Master-Funktion) gestaltet. Durch die Realisierung einer statisch bestimmten Lagerung können Zwangskräfte durch Flügel- und Klappenverformung sowie thermische Ausdehnung reduziert oder sogar verhindert werden. Das Festlager kann derart gestaltet sein, dass die Achse des Gelenks G4 momentfest zur Verstellklappe K und zum dritten Verstellhebel 13. Beim Loslager erfolgt die Anbindung der Verstellklappe K an den dritten Verstellhebel 13, also in dem Gelenk G4, sphärisch, so dass der dritten Verstellhebel 13 die Funktion einer Pendelstütze (swing-link) erhält.

An einer oder mehreren der Antriebsmechanismen kann eine Anschlagvorrichtung zur Begrenzung der maximalen Ausfahrstellung der Hebel des jeweiligen Verstellmechanismus vorgesehen sein. Eine solche Anschlagsvorrichtung kann in verschiedener Weise ausgebildet und insbesondere mit einem Anschlaghebel sein. Die Anschlagvorrichtung kann an nur einem Verstellmechanismus, an mehreren Verstellmechanismen oder an sämtlichen Verstellmechanismen einer Verstellvorrichtung 10 vorgesehen sein. In den Figuren 6 und 7 sind jeweils ein Ausführungsbeispiel der erfindungsgemäßen Anschlagvorrichtung dargestellt, wobei sich diese dargestellten Ausführungsbeispiele der Anschlagvorrichtung zwischen dem ersten 11 und einem zweiten 12 Verstellhebel wirken, so dass die Wirkungslinien W11 bzw. W12 derselben in der maximalen Ausfahrstellung, die die Anschlagvorrichtung definiert, in einem Winkel alpha (α) zueinander verlaufen. Unter Wirkungslinie des ersten Verstellhebels oder des zweiten Verstellhebels 12, 22 wird in diesem Fall die Verbindungslinie zwischen der ersten Achse A11, A21 und der dritten Achse A13, A23 bzw. zwischen der dritten Achse A12, A22 und der zweiten Achse A12, A22 verstanden.

In der Figur 6 ist eine Schnittdarstellung eines Ausführungsbeispiels einer Anschlagvorrichtung 60 an Hand des ersten Verstellmechanismus 10a gezeigt, wobei die Merkmale dieses Ausführungsbeispiel alternativ oder zusätzlich am zweiten Verstellmechanismus 10b vorgesehen sein können. In dem dargestellten Ausführungsbeispiel ist der Anschlaghebel derart an dem Verstellmechanismus vorgesehen, dass dieser zwischen dem ersten Verstellhebel 11 und dem zweiten Verstellhebel 12 wirkt. Dazu ist in dem dargestellten Ausführungsbeispiel ein Anschlaghebel 16 an dem ersten Verstellhebel 11 angeordnet.

Der Anschlaghebel 61 ist einstückig mit dem ersten Verstellhebel 11 und als Verlängerung desselben in Richtung zur zweiten Achse A2 gebildet. Das freie Ende 62 des Anschlaghebels 61 ist zur Anlage an der Oberseite 12a des zweiten Verstellhebels 12 vorgesehen, wenn die Ausfahrstellung der Hochauftriebsklappe K maximal ist, d.h. wenn der die Hochauftriebsklappe K in ihrer maximalen Ausfahrstellung befindet. Als Gegenlage an dem zweiten Verstellhebel 12, auf der der Anschlaghebel 61 aufliegt, wenn der Verstellmechanismus 10a in der maximalen Ausfahrstellung befindet, kann eine Auflagevorrichtung insbesondere in Form einer Auflageplatte 63 vorgesehen sein.

Alternativ oder zusätzlich zu dieser Ausführungsform kann auch ein Anschlaghebel 16 an dem zweiten Verstellhebel 12 angeordnet sein. Dabei ergeben sich die Merkmale analog zu dem zuvor beschriebenen Ausführungsbeispiel, bei dem der Anschlaghebel 16 an dem ersten Verstellhebel 11 angeordnet ist.

Alternativ oder zusätzlich dazu kann die Anschlagvorrichtung 60, 70 mit einem Anschlaghebel 61, 71 zur Begrenzung der maximalen Ausfahrstellung der Hochauftriebsklappe K derart ausgeführt sein, dass diese zwischen der Hochauftriebsklappe K und dem zweiten Verstellhebel 12, 22 und/oder zwischen dem Hauptflügel H und dem ersten Verstellhebel 11, 21 wirkt.

In der ersten genannten Alternative ist der Anschlaghebel 61, 71 einstückig mit dem zweiten Verstellhebel 12, 22 oder mit einem Beschlag der Hochauftriebsklappe K und als Verlängerung desselben in Richtung zu dem Beschlag der Hochauftriebsklappe K oder zum dritten Gelenk 13, 23 gebildet ist und der derart gestaltet ist, dass das freie Ende 62, 72 des Anschlagshebels 61, 71 in eine Anschlagstellung mit dem Beschlag der Hochauftriebsklappe K oder dem zweiten Verstellhebel 12, 22 gebracht werden kann, um die maximale Ausfahrstellung des jeweiligen Verstellmechanismus 10a, 10b zu definieren.

In der zweiten genannten Alternative ist der Anschlaghebel 61, 71 einstückig mit dem jeweiligen ersten Verstellhebel 11, 21 oder mit einem Beschlag des Hauptflügels H und als Verlängerung desselben in Richtung zu dem Beschlag des Hauptflügels H oder zum dritten Gelenk 13, 23 gebildet ist und der derart gestaltet ist, dass das freie Ende 62, 72 des Anschlagshebels 61, 71 in eine Anschlagstellung mit dem Beschlag des Hauptflügels H oder dem ersten Verstellhebel 11, 21 gebracht werden kann, um die maximale Ausfahrstellung des jeweiligen Verstellmechanismus 10a, 10b zu definieren.

Erfindungsgemäße kann die Anschlagvorrichtung derart gestaltet sein, dass die Anschlagvorrichtung 60, 70 eine maximale Ausfahrstellung des Vorflügels begrenzt wird, bei der die Wirkungsrichtungen W11, W12 der Verstellhebel zueinander einen Winkel (alpha) von weniger als 180 Grad und z.B. maximal 179 Grad haben.

Generell kann der Anschlaghebel 61 mit einer Federvorrichtung 65 versehen sein, die insbesondere als Querschnittsverjüngung des Anschlagshebels 61 ausgebildet sein kann. In dem Ausführungsbeispiel nach der Figur 6 wird dadurch erreicht, dass in der Phase, in der die Verstellvorrichtung 10 ihre maximale Ausfahrstellung erreicht, z.B. indem das freie Ende des Anschlagshebels 61 in Anlage mit dem zweiten Verstellhebel oder der Auflageplatte 63 derselben kommt, die dabei entstehenden Anschlagmomente und Anschlagkräfte von dem Anschlagshebel 61 federnd aufgenommen wird. Dadurch wird der Anschlag der Verstellhebel 11, 12 bei Erreichen der maximalen Ausfahrstellung der Verstellvorrichtung oder des jeweiligen Verstellmechanismus mit einem federnden Aufnahmeweg versehen und die Anschlagkräfte minimiert. Auf diese Weise können die maximal auftretenden Kräfte bei dem Erreichen des Anschlags in der maximalen Ausfahrstellung reduziert und die Strukturdimensionierung optimiert werden.

Alternativ oder zusätzlich kann die Federvorrichtung auch durch eine z.B. zwischen dem ersten Verstellhebel oder dem zweiten Verstellhebel wirkende Federvorrichtung 75 (Figur 4) gebildet sein, wie dies in dem in der Figur 4 dargestellten Ausführungsbeispiel vorgesehen ist. Wenn die Anschlagvorrichtung 60, 70 zur Begrenzung der maximalen Ausfahrstellung der Hochauftriebsklappe K derart ausgeführt sein soll, dass diese zwischen der Hochauftriebsklappe K und dem zweiten Verstellhebel 12, 22 und/oder zwischen dem Hauptflügel H und dem ersten Verstellhebel 11, 21 wirkt, kann eine Federvorrichtung nach der Figur 7 in analoger Weise auch an dem Hauptflügel 10 oder an der Hochauftriebsklappe K angeordnet sein.

Die Federvorrichtung ist derart angeordnet und ausgeführt, dass diese eine Rückstellkraft auf den jeweiligen Verstellmechanismus bzw. die Hebel des Verstellmechanismus ausübt, mit der der Verstellmechanismus bzw. die Hebel des Verstellmechanismus in ihre eingefahrene Stellung bewegt werden. Auch kann die Federvorrichtung dazu vorgesehen und derart ausgeführt sein, dass diese die Funktion ausübt, um das Erreichen der maximalen Ausfahrstellung des jeweiligen Verstellmechanismus abzufedern.

## Patentansprüche

1. Verstellmechanismus (10a, 10b) einer Verstellvorrichtung zur Ankopplung einer Verstellklappe (K) an einen Hauptflügel (H) eines Tragflügels (T) und zur Verstellung der Verstellklappe (K), der Verstellmechanismus (10a, 10b) aufweisend:
▪ einen ersten Verstellhebel (11, 21), der über ein erstes Drehgelenk (G11, G21) unter Ausbildung einer ersten Drehachse (A11, A21) an dem Hauptflügel angelenkt ist,
▪ einen zweiten Verstellhebel (12, 22),
**dadurch gekennzeichnet, dass** der Verstellmechanismus (10a, 10b) aufweist:
▪ einen dritten Verstellhebel (13), der über ein zweites Drehgelenk (G12) gelenkig unter Ausbildung einer zweiten Drehachse (A12, A22) an dem zweiten Verstellhebel (12, 22) und über ein viertes Drehgelenk (G14) gelenkig mit der Verstellklappe (K) gekoppelt ist, wobei der erste Verstellhebel (11, 21) und der zweite Verstellhebel (12, 22) über ein mittleres Gelenk (G13) unter Ausbildung einer dritten Drehachse (A13, A23) gelenkig miteinander gekoppelt sind und wobei die erste, zweite und dritte Drehachse (A11, A12, A13; A21, A22) in jeder Stellung der Verstellklappe (K) durch einen gemeinsamen Pol (P) verlaufen,
▪ einen Zug-Druck-Stab (15), der über ein erstes Kugelgelenk (K1) mit dem zweiten Verstellhebel (12) und über ein zweites Kugelgelenk (K2) mit der Verstellklappe (K) verbunden ist.

2. Verstellmechanismus (10a, 10b) nach dem Anspruch 1, **dadurch gekennzeichnet, dass** das vierte Drehgelenk (G14) als sphärisches Drehgelenk (G14) ausgebildet ist.

3. Verstellmechanismus (10a, 10b) nach dem Anspruch 1, **dadurch gekennzeichnet, dass** das vierte Drehgelenk (G14) als Scharniergelenk (G14) ausgebildet ist.

4. Verstellmechanismus (10a, 10b) nach dem Anspruch 3, **dadurch gekennzeichnet, dass** das vierte Drehgelenk (G14) als Scharniergelenk (G14) ausgebildet ist.

5. Verstellvorrichtung (10) zur Verstellung einer Verstellklappe (K) an einem Tragflügel eines Flugzeugs mit zumindest zwei in der Spannweitenrichtung des Tragflügels (T) nebeneinander angeordneten Verstellmechanismen (10a, 10b) und einer Antriebsvorrichtung (50) zur Verstellung der Verstellklappe (K) gegenüber dem Hauptflügel (H) bewegbar angeordnet ist, wobei zumindest einer der Verstellmechanismen (10a, 10b) nach einem der vorstehenden Ansprüche gebildet ist.

6. Verstellvorrichtung (10) nach dem Anspruch 5, **dadurch gekennzeichnet, dass** das vierte Drehgelenk (G14) des Verstellmechanismus (10a, 10b) als Scharniergelenk (G14) ausgebildet ist, um die Anzahl der Freiheitsgrade der Lagerung der Verstellklappe (K) zu reduzieren.

7. Verstellvorrichtung (10) nach dem Anspruch 5, **dadurch gekennzeichnet, dass** das vierte Drehgelenk (G14) des Verstellmechanismus (10a, 10b) als sphärisches Drehgelenk (G14) ausgebildet ist, um die Anzahl der Freiheitsgrade der Lagerung der Verstellklappe (K) zu erhöhen.

8. Verstellvorrichtung (10) nach dem Anspruch 5, **dadurch gekennzeichnet, dass** ein weiterer der Verstellmechanismen (10a, 10b) aufweist:
▪ einen ersten Verstellhebel (11, 21), der über ein erstes Drehgelenk (G11, G21) unter Ausbildung einer ersten Drehachse (A11, A21) an dem Hauptflügel angelenkt ist,
▪ einen zweiten Verstellhebel (12, 22), der über ein zweites Drehgelenk (G12, G22) unter Ausbildung einer zweiten Drehachse (A12, A22) an der Verstellklappe (K) angelenkt ist,
wobei der erste (11, 21) und der zweite (12, 22) Verstellhebel über ein mittleres Gelenk (G13, G23) unter Ausbildung einer dritten Drehachse (A13, A23) gelenkig miteinander verbunden sind und wobei die erste, zweite und dritte Drehachse (A11, A12, A13; A21, A22) in jeder Stellung der Verstellklappe (K) durch einen gemeinsamen Pol (P) verlaufen.

9. Verstellvorrichtung (10) nach einem der voranstehenden Ansprüche 5 bis 8, **dadurch gekennzeichnet, dass** die Verstellklappe (K) ein Vorflügel ist.

10. Verstellvorrichtung (10) nach dem Anspruch 9, **dadurch gekennzeichnet, dass** der Vorflügel eine Krügerklappe ist, die in seiner eingefahrenen Stellung an der Unterseite (H1) des Hauptflügels (H) gelegen ist.

11. Verstellvorrichtung (10) nach dem Anspruch 9, **dadurch gekennzeichnet, dass** der Vorflügel ein Slat ist.

12. Verstellvorrichtung (10) nach einem der voranstehenden Ansprüche 5 bis 11, **dadurch gekennzeichnet, dass** die Verstellklappe (K) eine Hinterkanten-Klappe ist.

13. Verstellvorrichtung (10) nach einem der voranstehenden Ansprüche 5 bis 12, **dadurch gekennzeichnet, dass** die Antriebsvorrichtung (50) aus einem Linearantrieb gebildet ist.

14. Verstellvorrichtung (10) nach einem der voranstehenden Ansprüche 5 bis 13, **dadurch gekennzeichnet, dass** die Antriebsvorrichtung (50) aus einem Drehantrieb gebildet ist.

15. Verstellvorrichtung (10) nach einem der voranstehenden Ansprüche 5 bis 14, **dadurch gekennzeichnet, dass** der Tragflügel (T) eine Anschlagvorrichtung (60, 70) zur Begrenzung der maximalen Ausfahrstellung der Verstellklappe (K) aufweist und die Anschlagvorrichtung (60, 70) mit einem zwischen dem ersten (11, 21) und dem zweiten (12, 22) Verstellhebel wirkenden Anschlaghebel (61, 71) gebildet ist, der einstückig mit dem ersten Verstellhebel (11, 21) oder mit dem zweiten Verstellhebel (12, 22) und als Verlängerung desselben in Richtung zur zweiten Achse (A12, A22) oder zur ersten Achse (A11, A21) gebildet ist und der derart gestaltet ist, dass das freie Ende des Anschlagshebels (61, 71) in eine Anschlagstellung mit einer Auflagevorrichtung (63, 73) am zweiten Verstellhebel (12, 22) oder am ersten Verstellhebel (11, 21) gebracht werden kann, um die maximale Ausfahrstellung des jeweiligen Verstellmechanismus (10a, 10b) zu definieren.

16. Verstellvorrichtung (10) nach einem der voranstehenden Ansprüche 5 bis 15, **dadurch gekennzeichnet, dass** der Tragflügel (T) eine Anschlagvorrichtung (60, 70) zur Begrenzung der maximalen Ausfahrstellung der Verstellklappe (K) aufweist und die Anschlagvorrichtung (60, 70) mit einem Anschlaghebel (61, 71) zur Begrenzung der maximalen Ausfahrstellung der Verstellklappe (K) gebildet ist, der einstückig mit dem ersten Verstellhebel (11, 21) oder mit einem Beschlag des Hauptflügels (H) und als Verlängerung desselben in Richtung zu dem Beschlag des Hauptflügels (H) oder zum dritten Gelenk (13, 23) gebildet ist und der derart gestaltet ist, dass das freie Ende (62, 72) des Anschlagshebels (61, 71) in eine Anschlagstellung mit dem Beschlag des Hauptflügels (H) oder dem ersten Verstellhebel (11, 21) gebracht werden kann, um die maximale Ausfahrstellung des jeweiligen Verstellmechanismus (10a, 10b) zu definieren.

17. Verstellvorrichtung (10) nach einem der voranstehenden Ansprüche 5 bis 16, **dadurch gekennzeichnet, dass** der Tragflügel (T) eine Anschlagvorrichtung (60, 70) zur Begrenzung der maximalen Ausfahrstellung der Verstellklappe (K) aufweist und die Anschlagvorrichtung (60, 70) mit einem Anschlaghebel (61, 71) zur Begrenzung der maximalen Ausfahrstellung der Verstellklappe (K) gebildet ist, der einstückig mit dem zweiten Verstellhebel (12, 22) oder mit einem Beschlag der Verstellklappe (K) und als Verlängerung desselben in Richtung zu dem Beschlag der Verstellklappe (K) oder zum dritten Gelenk (13, 23) gebildet ist und der derart gestaltet ist, dass das freie Ende (62, 72) des Anschlagshebels (61, 71) in eine Anschlagstellung mit dem Beschlag der Verstellklappe (K) oder dem zweiten Verstellhebel (12, 22) gebracht werden kann, um die maximale Ausfahrstellung des jeweiligen Verstellmechanismus (10a, 10b) zu definieren.

## Claims

1. An adjusting mechanism (10a, 10b) of an adjusting device for coupling an adjustable flap (K) to a main wing (H) of a wing (T) and for adjusting the adjustable flap (K), the adjusting mechanism (10a, 10b) comprising:
• a first adjusting lever (11, 21) articulated to the main wing via a first rotary joint (G11, G21) so as to establish a first axis of rotation (A11, A21),
• a second adjusting lever (12, 22),
**characterized in that** the adjusting mechanism (10a, 10b) comprises:
• a third adjusting lever (13) coupled in an articulated manner to the second adjusting lever (12, 22) via a second rotary joint (G12) so as to establish a second axis of rotation (A12, A22) and coupled in an articulated manner to the adjustable flap (K) via a fourth rotary joint (G14), wherein the first adjusting lever (11, 21) and the second adjusting lever (12, 22) are coupled to each other in an articulated manner via a central joint (G13) so as to establish a third axis of rotation (A13, A23), and wherein the first, second and third axes of rotation (A11, A12, A13; A21, A22) pass through a common pole (P) in every position of the adjustable flap (K),
• a pull-push rod (15) connected to the second adjusting lever (12) via a first ball joint (K1) and to the adjustable flap (K) via a second ball joint (K2).

2. The adjusting mechanism (10a, 10b) according to claim 1, **characterized in that** the fourth rotary joint (G14) is constructed as a spherical rotary joint (G14).

3. The adjusting mechanism (10a, 10b) according to claim 1, **characterized in that** the fourth rotary joint (G14) is constructed as a hinge joint (G14).

4. The adjusting mechanism (10a, 10b) according to claim 3, **characterized in that** the fourth rotary joint (G14) is constructed as a hinge joint (G14).

5. An adjusting device (10) for adjusting an adjustable flap (K) on a wing of an aircraft, comprising at least two adjusting mechanisms (10a, 10b) arranged side by side in the span-wise direction of the wing (T) and a drive device (50) for adjusting the adjustable flap (K) is arranged movably relative to the main wing (H), wherein at least one of the adjusting mechanisms (10a, 10b) is constructed according to any of the preceding claims.

6. The adjusting device (10) according to claim 5, **characterized in that** the fourth rotary joint (G14) of the adjusting mechanism (10a, 10b) is constructed as a hinge joint (G14) in order to reduce the number of degrees of freedom of the mount of the adjustable flap (K).

7. The adjusting device (10) according to claim 5, **characterized in that** the fourth rotary joint (G14) of the adjusting mechanism (10a, 10b) is constructed as a spherical rotary joint (G14) in order to increase the number of degrees of freedom of the mount of the adjustable flap (K).

8. The adjusting device (10) according to claim 5, **characterized in that** another one of the adjusting mechanisms (10a, 10b) comprises:
• a first adjusting lever (11, 21) articulated to the main wing via a first rotary joint (G11, G21) so as to establish a first axis of rotation (A11, A21),
• a second adjusting lever (12, 22) articulated to the adjustable flap (K) via a second rotary joint (G12, G22) so as to establish a second axis of rotation (A12, A22),
wherein the first (11, 21) and the second (12, 22) adjusting lever are connected to each other in an articulated manner via a central joint (G13, G23) so as to establish a third axis of rotation (A13, A23) and wherein the first, second and third axes of rotation (A11, A12, A13; A21, A22) pass through a common pole (P) in every position of the adjustable flap (K).

9. The adjusting device (10) according to any of the preceding claims 5 to 8, **characterized in that** the adjustable flap (K) is a leading edge flap.

10. The adjusting device (10) according to claim 9, **characterized in that** the leading edge flap is a Krüger flap which, in its retracted position, is located on the lower side (H1) of the main wing (H).

11. The adjusting device (10) according to claim 9, **characterized in that** the leading edge flap is a slat.

12. The adjusting device (10) according to any of the preceding claims 5 to 11, **characterized in that** the adjustable flap (K) is a trailing edge flap.

13. The adjusting device (10) according to any of the preceding claims 5 to 12, **characterized in that** the drive device (50) is constituted by a linear drive.

14. The adjusting device (10) according to any of the preceding claims 5 to 13, **characterized in that** the drive device (50) is constituted by a rotary drive.

15. The adjusting device (10) according to any of the preceding claims 5 to 14, **characterized in that** the wing (T) comprises a stop device (60, 70) for limiting the maximum extended position of the adjustable flap (K) and the stop device (60, 70) is constructed with a stop lever (61, 71) acting between the first (11, 21) and the second (12, 22) adjusting lever, which stop lever (61, 71) is formed integrally with the first adjusting lever (11, 21) or with the second adjusting lever (12, 22) and as an extension thereof in the direction toward the second axis (A12, A22) or toward the first axis (A11, A21), and which stop lever (61, 71) is configured such that the free end of the stop lever (61, 71) can be brought into a position of abutment against a support device (63, 73) on the second adjusting lever (12, 22) or on the first adjusting lever (11, 21), in order to define the maximum extended position of the respective adjusting mechanism (10a, 10b).

16. The adjusting device (10) according to any of the preceding claims 5 to 15, **characterized in that** the wing (T) comprises a stop device (60, 70) for limiting the maximum extended position of the adjustable flap (K) and the stop device (60, 70) is constructed with a stop lever (61, 71) for limiting the maximum extended position of the adjustable flap (K), which stop lever (61, 71) is formed integrally with the first adjusting lever (11, 21) or with an armature of the main wing (H) and as an extension thereof in the direction toward the armature of the main wing (H) or toward the third joint (13, 23), and which stop lever (61, 71) is configured such that the free end (62, 72) of the stop lever (61, 71) can be brought into a position of abutment against the armature of the main wing (H) or the first adjusting lever (11, 21) in order to define the maximum extended position of the respective adjusting mechanism (10a, 10b).

17. The adjusting device (10) according to any of the preceding claims 5 to 16, **characterized in that** the wing (T) comprises a stop device (60, 70) for limiting the maximum extended position of the adjustable flap (K), and the stop device (60, 70) is constructed with a stop lever (61, 71) for limiting the maximum extended position of the adjustable flap (K), which stop lever (61, 71) is formed integrally with the second adjusting lever (12, 22) or with an armature of the adjustable flap (K) and as an extension thereof in the direction toward the armature of the adjustable flap (K) or toward the third joint (13, 23), and which stop lever (61, 71) is configured such that the free end (62, 72) of the stop lever (61, 71) can be brought into a position of abutment against the armature of the adjustable flap (K) or the second adjusting lever (12, 22) in order to define the maximum extended position of the respective adjusting mechanism (10a, 10b).

## Revendications

1. Mécanisme de réglage (10a, 10b) d'un dispositif de réglage pour accoupler un volet de réglage (K) à une voilure principale (H) d'une aile portante (T) et pour régler le volet de réglage (K), ledit mécanisme de réglage (10a, 10b) comportant :
- un premier levier de réglage (11, 21) qui, par l'intermédiaire d'une première articulation rotative (G11, G21), est articulé contre la voilure principale moyennant la formation d'un premier axe de rotation (A11, A21),
- un deuxième levier de réglage (12, 22),
**caractérisé en ce que** le mécanisme de réglage (10a, 10b) comporte :
- un troisième levier de réglage (13) qui, par l'intermédiaire d'une deuxième articulation rotative (G12) est articulé contre le levier de réglage (12, 22) moyennant la formation d'un deuxième axe de rotation (A12, A22) et, par l'intermédiaire d'une quatrième articulation rotative (G14), est couplé de manière articulée au volet de réglage (K), le premier levier de réglage (11, 21) et le deuxième levier de réglage (12, 22) étant couplés l'un à l'autre de manière articulée par l'intermédiaire d'une articulation centrale (G13) moyennant la formation d'un troisième axe de rotation (A13, A23), et le premier, deuxième et troisième axe de rotation (A11, A12, A13 ; A21, A22) passant par un pôle commun (P) dans chaque position du volet de réglage (K),
- une barre de traction-pression (15), qui est reliée au deuxième levier de réglage (12) par l'intermédiaire d'une première articulation à rotule (K1) et est reliée au volet de réglage (K) par l'intermédiaire d'une deuxième articulation à rotule (K2).

2. Mécanisme de réglage (10a, 10b) selon la revendication 1, **caractérisé en ce que** la quatrième articulation rotative (G14) est réalisée sous la forme d'une articulation rotative sphérique (G14).

3. Mécanisme de réglage (10a, 10b) selon la revendication 1, **caractérisé en ce que** la quatrième articulation rotative (G14) est réalisée sous la forme d'une articulation à charnière (G14).

4. Mécanisme de réglage (10a, 10b) selon la revendication 3, **caractérisé en ce que** la quatrième articulation rotative (G14) est réalisée sous la forme d'une articulation à charnière (G14).

5. Dispositif de réglage (10) permettant de régler un volet de réglage (K) sur une aile portante d'un avion, comportant au moins deux mécanismes de réglage (10a, 10b), disposés l'un à côté de l'autre dans le sens de l'envergure de l'aile portante (T), et un dispositif d'entraînement (50) pour le réglage du volet de réglage (K), monté de manière mobile par rapport à la voilure principale (H), au moins un des mécanismes de réglage (10a, 10b) étant réalisé selon l'une quelconque des revendications précédentes.

6. Dispositif de réglage (10) selon la revendication 5, **caractérisé en ce que** la quatrième articulation rotative (G14) du mécanisme de réglage (10a, 10b) est réalisée sous la forme d'une articulation à charnière (G14), afin de réduire le nombre de degrés de liberté du positionnement du volet de réglage (K).

7. Dispositif de réglage (10) selon la revendication 5, **caractérisé en ce que** la quatrième articulation rotative (G14) du mécanisme de réglage (10a, 10b) est réalisée sous la forme d'une articulation rotative sphérique (G14), afin d'augmenter le nombre de degrés de liberté du positionnement du volet de réglage (K).

8. Dispositif de réglage (10) selon la revendication 5, **caractérisé en ce qu'**un autre des mécanismes de réglage (10a, 10b) comporte :
- un premier levier de réglage (11, 21) qui, par l'intermédiaire d'une première articulation rotative (G11, G21), est articulé contre la voilure principale moyennant la formation d'un premier axe de rotation (A11, A21),
- un deuxième levier de réglage (12, 22) qui, par l'intermédiaire d'une deuxième articulation rotative (G12, G22), est articulé contre le volet de réglage (K) moyennant la formation d'un deuxième axe de rotation (A12, A22),
le premier (11, 21) et le deuxième levier de réglage (12, 22) étant reliés l'un à l'autre de manière articulée par l'intermédiaire d'une articulation centrale (G13, G23) moyennant la formation d'un troisième axe de rotation (A13, A23), et le premier, deuxième et troisième axe de rotation (A11, A12, A13 ; A21, A22) passant par un pôle commun (P) dans chaque position du volet de réglage (K).

9. Dispositif de réglage (10) selon l'une des revendications précédentes 5 à 8, **caractérisé en ce que** le volet de réglage (K) est un volet de bord d'attaque.

10. Dispositif de réglage (10) selon la revendication 9, **caractérisé en ce que** le volet de bord d'attaque est un bec Krüger qui, dans sa position escamotée, est rabattu sur l'intrados (H1) de la voilure principale (H).

11. Dispositif de réglage (10) selon la revendication 9, **caractérisé en ce que** le volet de bord d'attaque est un slat.

12. Dispositif de réglage (10) selon l'une des revendications précédentes 5 à 11, **caractérisé en ce que** le volet de réglage (K) est un volet de bord de fuite.

13. Dispositif de réglage (10) selon l'une des revendications précédentes 5 à 12, **caractérisé en ce que** le dispositif d'entraînement (50) est formé à partir d'un système d'entraînement linéaire.

14. Dispositif de réglage (10) selon l'une des revendications précédentes 5 à 13, **caractérisé en ce que** le dispositif d'entraînement (50) est formé à partir d'un système d'entraînement rotatif.

15. Dispositif de réglage (10) selon l'une des revendications précédentes 5 à 14, **caractérisé en ce que** l'aile portante (T) comporte un dispositif de butée (60, 70) pour limiter la position d'extraction maximale du volet de réglage (K), et ledit dispositif de butée (60, 70) est réalisé avec un levier de butée (61, 71), qui agit entre le premier (11, 21) et le deuxième levier de réglage (12, 22), qui est réalisé d'un seul tenant avec le premier levier de réglage (11, 21) ou avec le deuxième levier de réglage (12, 22) et sous forme de prolongement de ceux-ci vers le deuxième axe (A12, A22) ou vers le premier axe (A11, A21) et qui est configuré de telle sorte que l'extrémité libre du levier de butée (61, 71) peut être amenée dans une position de butée avec un dispositif d'appui (63, 73) sur le deuxième levier de réglage (12, 22) ou sur le premier levier de réglage (11, 21), afin de définir la position d'extraction maximale du mécanisme de réglage (10a, 10b) concerné.

16. Dispositif de réglage (10) selon l'une des revendications précédentes 5 à 15, **caractérisé en ce que** l'aile portante (T) comporte un dispositif de butée (60, 70) pour limiter la position d'extraction maximale du volet de réglage (K), et ledit dispositif de butée (60, 70) est réalisé avec un levier de butée (61, 71) pour limiter la position d'extraction maximale du volet de réglage (K), lequel est réalisé d'un seul tenant avec le premier levier de réglage (11, 21) ou avec une armature de la voilure principale (H) et sous forme de prolongement de ceux-ci vers l'armature de la voilure principale (H) ou vers la troisième articulation (13, 23) et lequel est configuré de telle sorte que l'extrémité libre (62, 72) du levier de butée (61, 71) peut être amenée dans une position de butée avec l'armature de la voilure principale (H) ou avec le premier levier de réglage (11, 21), afin de définir la position d'extraction maximale du mécanisme de réglage (10a, 10b) concerné.

17. Dispositif de réglage (10) selon l'une des revendications précédentes 5 à 16, **caractérisé en ce que** l'aile portante (T) comporte un dispositif de butée (60, 70) pour limiter la position d'extraction maximale du volet de réglage (K), et ledit dispositif de butée (60, 70) est réalisé avec un levier de butée (61, 71) pour limiter la position d'extraction maximale du volet de réglage (K), lequel est réalisé d'un seul tenant avec le deuxième levier de réglage (12, 22) ou avec une armature du volet de réglage (K) et sous forme de prolongement de ceux-ci vers l'armature du volet de réglage (K) ou vers la troisième articulation (13, 23) et lequel est configuré de telle sorte que l'extrémité libre (62, 72) du levier de butée (61, 71) peut être amenée dans une position de butée avec l'armature du volet de réglage (K) ou avec le deuxième levier de réglage (12, 22), afin de définir la position d'extraction maximale du mécanisme de réglage (10a, 10b) concerné.
